# EUROPEAN PATENT APPLICATION

(11) **EP 4 759 525 A1**
(43) Date of publication of application: **17.06.2026**
(21) Application number: 25215491.9
(22) Date of filing: 13.11.2025
(51) Int. Cl.: B29C 70/44, B29B 11/16, B29C 70/54

(54) **FORMING DRY FIBER COMPOSITE PREFORMS**

(30) Priority: 13.12.2024 US 202418981072
(71) Applicant: The Boeing Company, Arlington, VA 22202 (US)
(72) Inventor: SERENCSITS, William L., ARLINGTON, 22202 (US); FRY, Jessica Offutt, ARLINGTON, 22202 (US)
(74) Representative: Plasseraud IP

(57) **Abstract**

A method of forming a dry fiber stack, a carrier encapsulated composite, and a flexible consolidation and forming carrier are presented. The flexible consolidation and forming carrier comprises an integrated heating element arranged in a material support region, a flexible base material encompassing the integrated heating element, and a seal portion around a perimeter of the flexible consolidation and forming carrier.

## Description

### Field:

The present disclosure relates generally to composite manufacturing and more specifically to forming dry fiber composite preforms.

### Background:

Heated preforming of a composite material from the initial flat sheet to the final, complex contour is a significant challenge. Heating the materials, either dry materials or prepreg, makes the material more easily formed. However, heating the materials increases the requirement for support of the material. Additionally, heating a non-consolidated material is made more difficult if the materials are not in intimate contact with each other.

Dry fiber preforms do not have much structural integrity. Dry fiber preforms are held together with polymer threads which have a low softening and melting temperature. Many forming processes impart significant forces to the fibers. When the materials are heated, the polymer threads soften and the forming processes tear the material apart instead of carefully forming into the desired preform shape. Some materials may tear during forming even if not heated.

Therefore, it would be desirable to have a method and apparatus that takes into account at least some of the issues discussed above, as well as other possible issues.

### SUMMARY

The present disclosure provides a flexible consolidation and forming carrier system as defined by independent claim 1, a carrier encapsulated composite as defined by independent claim 8 and a method of forming a dry fiber stack as defined by independent claim 12. Preferred embodiments are defined in the appended dependent claims.

The flexible consolidation and forming carrier comprises an integrated heating element arranged in a material support region; a flexible base material encompassing the integrated heating element; and a seal portion around a perimeter of the flexible consolidation and forming carrier.

The carrier encapsulated composite comprises a first flexible consolidation and forming carrier with an integrated heating element in a material support region; a second flexible consolidation and forming carrier with an integrated heating element in a material support region; and a dry fiber stack between the first flexible consolidation and forming carrier and the second flexible consolidation and forming carrier and in contact with the material support region of the first flexible consolidation and forming carrier and the material support region of the second flexible consolidation and forming carrier.

In the method of forming a dry fiber stack a dry fiber stack is placed between a material support region of a first flexible consolidation and forming carrier comprising an integrated heating element in the material support region. A second flexible consolidation and forming carrier comprising an integrated heating element in the material support region is positioned over the dry fiber stack. The second flexible consolidation and forming carrier is sealed to the first flexible consolidation and forming carrier to form a carrier encapsulated composite. A vacuum is applied to the dry fiber stack within the carrier encapsulated composite. The carrier encapsulated composite is shaped while the dry fiber stack is under vacuum.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of carrier encapsulated composite in accordance with an illustrative embodiment;
**Figure 4** is an illustration of a top view of a flexible consolidation and forming carrier with a dry fiber stack in accordance with an illustrative embodiment;
**Figure 5** is an illustration of a cross-sectional view of punch forming a carrier encapsulated composite in accordance with an illustrative embodiment;
**Figure 6** is an illustration of a cross-sectional view of roll forming a carrier encapsulated composite in accordance with an illustrative embodiment;
**Figure 7** is an illustration of graphs of vacuum compaction pressure and temperature of a carrier encapsulated composite during processing in accordance with an illustrative embodiment;
**Figure 8** is a flowchart of a method of processing a dry fiber stack using flexible consolidation and forming carriers in accordance with an illustrative embodiment;
**Figure 9** is a flowchart of a method of forming a dry fiber stack in accordance with an illustrative embodiment;
**Figure 10** is an illustration of an aircraft manufacturing and service method in a form of a block diagram in accordance with an illustrative embodiment; and
**Figure 11** is an illustration of an aircraft in a form of a block diagram in which an illustrative embodiment may be implemented.

### DETAILED DESCRIPTION

The illustrative examples recognize and take into account several considerations. The illustrative embodiments recognize and take into account that there are obstacles associated with handling and forming dry-fiber materials. The illustrative embodiments recognize and take into account that existing attempts to heat an un-supported composite material result in the materials falling apart. The illustrative embodiments recognize and take into account that existing procedures rely on large, bulky tools, which are expensive and consume considerable floor space.

The illustrative embodiments recognize and take into account that existing heating methods for dry fiber materials can be insufficient to reach consolidation temperature through thickness of preform due to the thickness of the preform. The illustrative embodiments recognize and take into account that dry fiber materials are inherently "bulky". The illustrative embodiments recognize and take into account that dry fiber materials contain significant amounts of air which act as insulation.

The illustrative embodiments recognize and take into account that a combination of thickness and significant amounts of air can result in an inability to reach a desired temperature, and unacceptable temperature gradients through the preform. Due to the bulk (excess air) the material is hard to heat uniformly.

The illustrative embodiments recognize and take into account that for some existing processes, if sufficient temperatures are reached, material is unsupported. The illustrative embodiments recognize and take into account that without adequate support, the material tends to sag and fall apart. The illustrative embodiments recognize and take into account that forming temperature results in the softening or melting of polymer stabilizing reinforcements (knit threads, veils), so tension applied to NCF material results in material falling apart.

The illustrative embodiments recognize and take into account that current roller forming methods for forming of dry fabric materials attempt to heat the material, which is held in tension by rollers. The illustrative embodiments recognize and take into account that infrared heating lamps in roller forming methods can be undesirably inefficient. The illustrative embodiments recognize and take into account that the tension of the rollers can tear the material apart.

The illustrative examples provide flexible consolidation and forming carriers. The illustrative examples impart tension to the heated carrier membrane using the rollers so the dry material is not damaged. The illustrative examples provide flexible consolidation and forming carriers with integrated heating elements. In the illustrative examples, the part is heated by conduction from the heating elements in the carrier membrane.

The illustrative examples describe a way to utilize a heated membrane carrier to pre-consolidate the plies, heat them, keep them at temperature through the forming process, and then maintain the shape after forming. The illustrative examples provide the flexible carrier material, which holds the dry material together and heats it with integral heating. The illustrative examples provide controlled application of vacuum, to provide for through thickness heating, and also relaxed vacuum to allow for fibers to slip during the forming phase of the process. The illustrative examples provide selective application of vacuum through the forming process to enable high quality forming of the preform.

The illustrative examples provide a vacuum tight carrier membrane to heat and support the dry fiber material through the forming process.

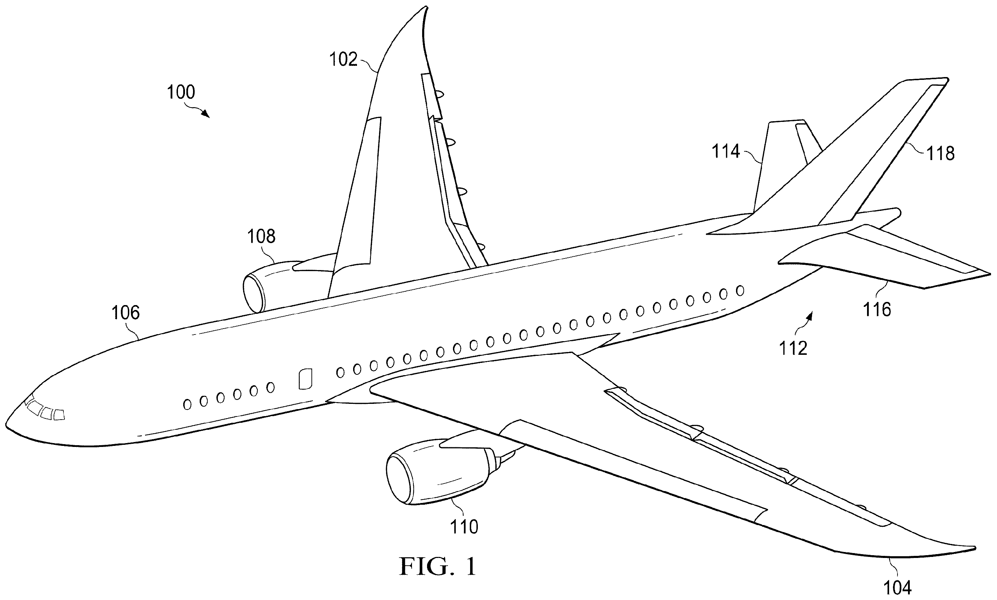

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

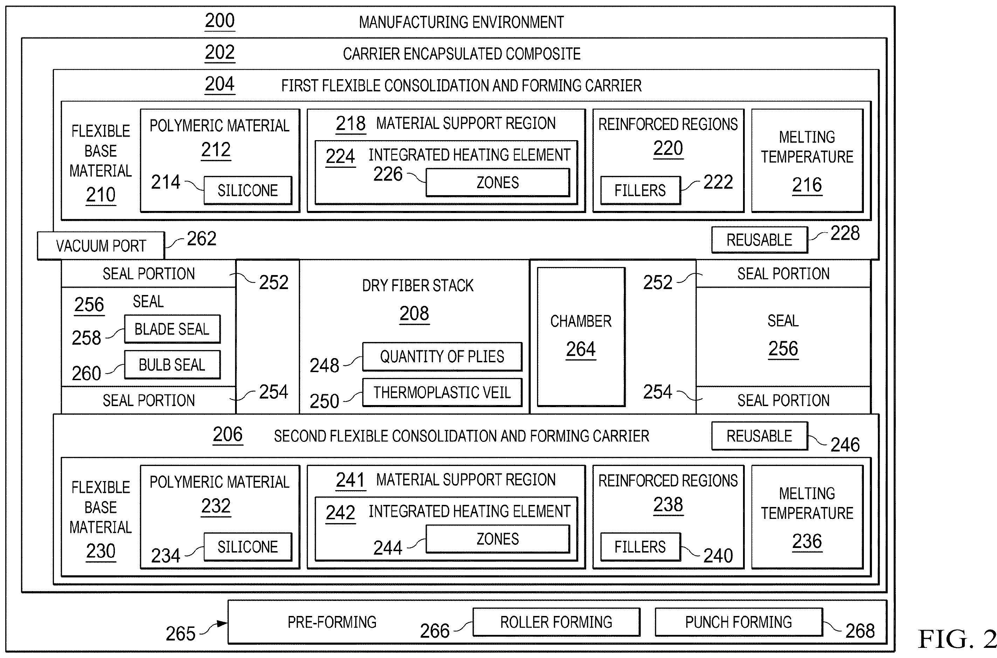

Aircraft **100** is an example of an aircraft that can have composite material parts manufactured using methods of the illustrative examples. In some illustrative examples, a portion of at least one of wing **102,** wing **104,** or body **106** can be a composite part formed using the illustrative examples. Turning now to **Figure 2****,** an illustration of a block diagram of a manufacturing environment is depicted in accordance with an illustrative embodiment. In manufacturing environment **200,** dry fiber stack **208** is placed between first flexible consolidation and forming carrier **204** and second flexible consolidation and forming carrier **206** to form carrier encapsulated composite **202.** Dry fiber stack **208** is consolidated and formed inside of carrier encapsulated composite **202.** First flexible consolidation and forming carrier **204** and second flexible consolidation and forming carrier **206** heat dry fiber stack **208** using integrated heating element **224** and integrated heating element **242.** In some illustrative examples, dry fiber stack **208** can be referred to as a non-crimp fabric.

Carrier encapsulated composite **202** comprises first flexible consolidation and forming carrier **204** with integrated heating element **224** in material support region **218,** second flexible consolidation and forming carrier **206** with integrated heating element **242** in material support region **241,** and dry fiber stack **208** between first flexible consolidation and forming carrier **204** and second flexible consolidation and forming carrier **206** and in contact with material support region **218** of first flexible consolidation and forming carrier **204** and material support region **241** of second flexible consolidation and forming carrier **206.**

First flexible consolidation and forming carrier **204** is sealed to second flexible consolidation and forming carrier **206** by seal **256** comprising one of blade seal **258** or bulb seal **260.** Vacuum port **262** is configured to provide vacuum communication through seal **256** to dry fiber stack **208.** Integrated heating element **224** of first flexible consolidation and forming carrier **204** and integrated heating element **242** of second flexible consolidation and forming carrier **206** each comprise a respective plurality of independently controlled zones, zones **226** and zones **244.**

First flexible consolidation and forming carrier **204** comprises integrated heating element **224** arranged in material support region **218,** flexible base material **210** encompassing integrated heating element **224,** and seal portion **252** around a perimeter of first flexible consolidation and forming carrier **204.**

First flexible consolidation and forming carrier **204** is configured to heat dry fiber stack **208** in contact with material support region **218.** First flexible consolidation and forming carrier **204** is configured to heat dry fiber stack **208** using integrated heating element **224.** Integrated heating element **224** takes any desirable form. Integrated heating element **224** is sufficiently flexible to move with flexible base material **210** in forming dry fiber stack **208.** In some illustrative examples, integrated heating element **224** is arranged in any desirable orientation or arrangement. In some illustrative examples, integrated heating element **224** is arranged in a serpentine pattern. In some illustrative examples, integrated heating element **224** comprises a plurality of independently controlled zones, zones **226.** A heater controller (not depicted) can be present to control different zones, zones **226** of integrated heating element **224** and zones **244** of integrated heating element **242.** Thickness and power of integrated heating element **224** and integrated heating element **242** can be tailored based on materials and size of parts. Flexible base material **210** comprises polymeric material **212.** Flexible base material **210** comprises polymeric material **212** with melting temperature **216** higher than a forming temperature of dry fiber stack **208.** Flexible base material **210** is sufficiently flexible to move with dry fiber stack **208** during forming of dry fiber stack **208.** Flexible base material **210** is sufficiently flexible to undergo a forming process while maintaining temperature. In some illustrative examples, flexible base material **210** comprises silicone **214.**

In some illustrative examples, flexible base material **210** comprises a single flexibility throughout first flexible consolidation and forming carrier **204.** In some illustrative examples, reinforced regions **220** with fillers **222** are configured to change a flexibility within reinforced regions **220.** In some illustrative examples, flexible base material **210** is chosen to become more flexible at forming temperature and rigid when cool to provide additional preform stability. First flexible consolidation and forming carrier **204** is an integrally heated carrier material that is larger than the overall size of dry fiber stack **208** and seals against another flexible consolidation and forming carrier, such as second flexible consolidation and forming carrier **206.** A heated carrier material mitigates use of external heaters. Additionally, conduction is superior to radiation for heating as conduction heating by integrated heating element **224** can be precisely controlled with TC feedback.

In some illustrative examples, seal portion **252** comprises integral sealing surfaces. Seal portion **252** is configured to interface with a seal portion of an additional flexible consolidation and forming carrier to seal dry fiber stack **208** within a chamber between first flexible consolidation and forming carrier **204** and the additional flexible consolidation and forming carrier. In this illustrative example, first flexible consolidation and forming carrier **204** is sealed to second flexible consolidation and forming carrier **206** to form chamber **264.**

Vacuum port **262** is configured to provide vacuum communication through seal portion **252** to material support region **218.** Vacuum port **262** is configured to provide vacuum communication through seal portion **252** to dry fiber stack **208** within chamber **264.**

Dry fiber stack **208** comprises quantity of plies **248** with thermoplastic veil **250.** Thermoplastic veil **250** is at least one of melted or softened by heating by integrated heating element **224** of first flexible consolidation and forming carrier **204.**

Second flexible consolidation and forming carrier **206** comprises integrated heating element **242** arranged in material support region **241,** flexible base material **230** encompassing integrated heating element **242,** and seal portion **254** around a perimeter of second flexible consolidation and forming carrier **206.** Second flexible consolidation and forming carrier **206** is configured to heat dry fiber stack **208** in contact with material support region **241.** Second flexible consolidation and forming carrier **206** is configured to heat dry fiber stack **208** using integrated heating element **242.** Integrated heating element **242** takes any desirable form. Integrated heating element **242** is sufficiently flexible to move with flexible base material **230** in forming dry fiber stack **208.** In some illustrative examples, integrated heating element **242** is arranged in any desirable orientation or arrangement. In some illustrative examples, integrated heating element **242** is arranged in a serpentine pattern. In some illustrative examples, integrated heating element **242** comprises a plurality of independently controlled zones, zones **244.**

Flexible base material **230** comprises polymeric material **232.** Flexible base material **230** comprises polymeric material **232** with melting temperature **236** higher than a forming temperature of dry fiber stack **208.** Flexible base material **230** is sufficiently flexible to move with dry fiber stack **208** during forming of dry fiber stack **208.** In some illustrative examples, flexible base material **230** comprises silicone **234.** In some illustrative examples, flexible base material **230** comprises a single flexibility throughout second flexible consolidation and forming carrier **206.** In some illustrative examples, reinforced regions **238** with fillers **240** are configured to change a flexibility within reinforced regions **238.**

Seal portion **254** is configured to interface with seal portion **252** of first flexible consolidation and forming carrier **204** to seal dry fiber stack **208** within a chamber between second flexible consolidation and forming carrier **206** and first flexible consolidation and forming carrier **204.** In this illustrative example, second flexible consolidation and forming carrier **206** is sealed to first flexible consolidation and forming carrier **204** to form chamber **264.**

Seal portion **252** and seal portion **254** interface to form seal **256.** In some illustrative examples, seal **256** is one of blade seal **258** or bulb seal **260.** In some illustrative examples, seal portion **252** comprises a portion of at least one of blade seal **258** or bulb seal **260.** In some illustrative examples, seal portion **254** comprises a portion of at least one of blade seal **258** or bulb seal **260.**

To process dry fiber stack **208,** heat from integrated heating element **224** and integrated heating element **242** is applied to dry fiber stack **208.** Quantity of plies **248** is high enough that convective heating would not heat dry fiber stack **208** evenly. In some illustrative examples, quantity of plies **248** comprises twenty or more plies. In some illustrative examples, dry fiber stack **208** can be referred to as a full thickness part.

While heating dry fiber stack **208** within chamber **264** formed by first flexible consolidation and forming carrier **204** and second flexible consolidation and forming carrier **206,** vacuum is applied and controlled through vacuum port **262.** Application of vacuum compacts dry fiber stack **208,** to improve through thickness heating and improve material stability. During compaction of dry fiber stack **208,** a full vacuum can be applied to dry fiber stack **208.** During shaping and forming of dry fiber stack **208,** vacuum is lessened to control stiffness and to prevent or reduce wrinkles. Lowering the vacuum enables shifting and sliding of plies in dry fiber stack **208** to prevent or reduce wrinkles. When dry fiber stack **208** has reached a final shape, vacuum is increased to full vacuum. A full vacuum is held until dry fiber stack **208** is cool enough for thermoplastic veil **250** to have cooled and retain final form shape.

Prior to compaction, dry fiber stack **208** is loaded onto one of first flexible consolidation and forming carrier **204** or second flexible consolidation and forming carrier **206** and first flexible consolidation and forming carrier **204** and second flexible consolidation and forming carrier **206** are sealed to form chamber **264.**

Dry fiber stack **208** is compacted and heated within chamber **264.** Carrier encapsulated composite **202** is sent through pre-forming **265** for dry fiber stack **208.** Carrier encapsulated composite **202** is formed as a unit through at least one of roller forming **266,** punch forming **268,** vacuum forming, or any other desirable preforming operation.

After pre-forming **265** dry fiber stack **208,** at least one of ambient cooling or active cooling with forced air convection is performed for a post forming cool down. In some illustrative examples, dry fiber stack **208** is removed from first flexible consolidation and forming carrier **204** or second flexible consolidation and forming carrier **206** afterwards. In some illustrative examples, dry fiber stack **208** is kept in place between first flexible consolidation and forming carrier **204** and second flexible consolidation and forming carrier **206** to remain rigid at room temperature and to assist with transportation of dry fiber stack **208.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, a series of rollers can be present in manufacturing environment **200** to perform roller forming **266.** As another example, a punch and die can be present in manufacturing environment **200** to perform punch forming **268.**

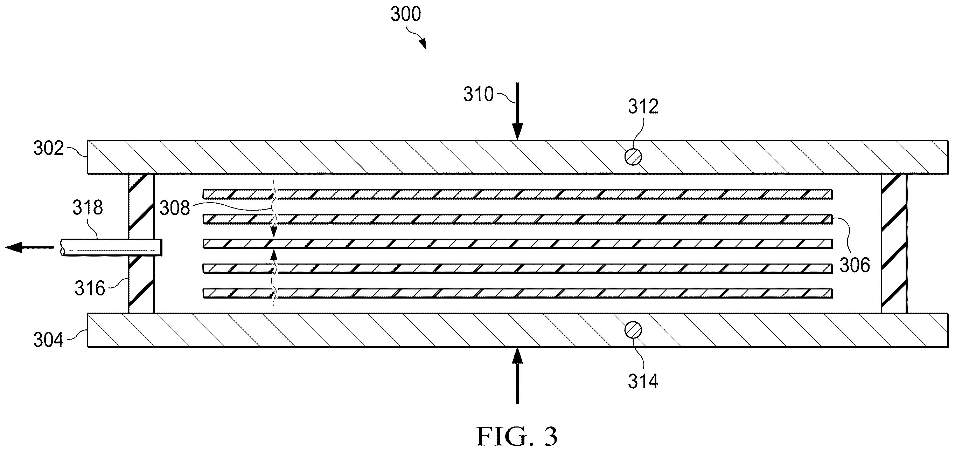

Turning now to **Figure 3****,** an illustration of a cross-sectional view of carrier encapsulated composite is depicted in accordance with an illustrative embodiment. Carrier encapsulated composite **300** can be used to compact and preform a composite structure of aircraft **100** of **Figure 1****.** Carrier encapsulated composite **300** can be a physical implementation of carrier encapsulated composite **202** of **Figure 2****.**

Carrier encapsulated composite **300** comprises first flexible consolidation and forming carrier **302** with an integrated heating element in a material support region, second flexible consolidation and forming carrier **304** with an integrated heating element in a material support region; and dry fiber stack **306** between first flexible consolidation and forming carrier **302** and second flexible consolidation and forming carrier **304.** Dry fiber stack **306** is in contact with the material support region of first flexible consolidation and forming carrier **302** and the material support region of the second flexible consolidation and forming carrier **304.**

First flexible consolidation and forming carrier **302** is sealed to second flexible consolidation and forming carrier **304** by seal **316** comprising one of a blade seal or a bulb seal. Vacuum port **318** is configured to provide vacuum communication through seal **316** to dry fiber stack **306.**

Integrated heating elements in first flexible consolidation and forming carrier **302** and second flexible consolidation and forming carrier **304** provide heat flow **308** into the entire thickness of dry fiber stack **306.** Compaction pressure **310** is applied to dry fiber stack **306** while dry fiber stack **306** is under vacuum through vacuum port **318.**

Feedback thermocouple **312** in first flexible consolidation and forming carrier **302** is used to control heating by the integrated heating element in first flexible consolidation and forming carrier **302.** Feedback thermocouple **314** in second flexible consolidation and forming carrier **304** is used to control heating by the integrated heating element in second flexible consolidation and forming carrier **304.**

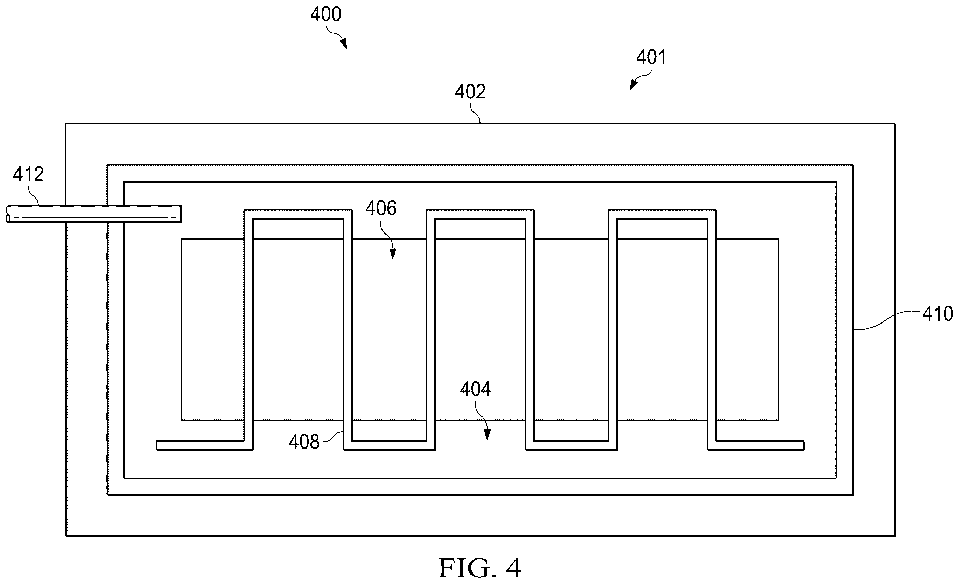

Turning now to **Figure 4****,** an illustration of a top view of a flexible consolidation and forming carrier with a dry fiber stack is depicted in accordance with an illustrative embodiment. View **400** is a top view of flexible consolidation and forming carrier **401** with dry fiber preform **406.** Dry fiber preform **406** may also be referred to as a dry fiber stack. Flexible consolidation and forming carrier **401** can be used to form dry fiber preform **406** into a composite structure of aircraft **100** of **Figure 1****.** Flexible consolidation and forming carrier **401** can be a physical implementation of one of first flexible consolidation and forming carrier **204** or second flexible consolidation and forming carrier **206** of **Figure 2****.**

In some illustrative examples, flexible consolidation and forming carrier **401** can be one of first flexible consolidation and forming carrier **302** or second flexible consolidation and forming carrier **304.**

Flexible consolidation and forming carrier **401** comprises integrated heating element **408** arranged in material support region **404.** Flexible base material **402** encompasses integrated heating element **408.** Seal portion **410** is present around a perimeter of flexible consolidation and forming carrier **401.** Vacuum port **412** extends through seal portion **410** to provide vacuum to dry fiber preform **406** within material support region **404.**

In this illustrative example, although integrated heating element **408** is visible, in some illustrative examples, flexible base material **402** is opaque and integrated heating element **408** is not visible. Additionally, although dry fiber preform **406** is depicted in phantom, in practice, dry fiber preform **406** would be opaque and integrated heating element **408** would not be visible.

In this illustrative example, integrated heating element **408** has a serpentine design. In other non-depicted examples, an integrated heating element can have any desirable size and shape.

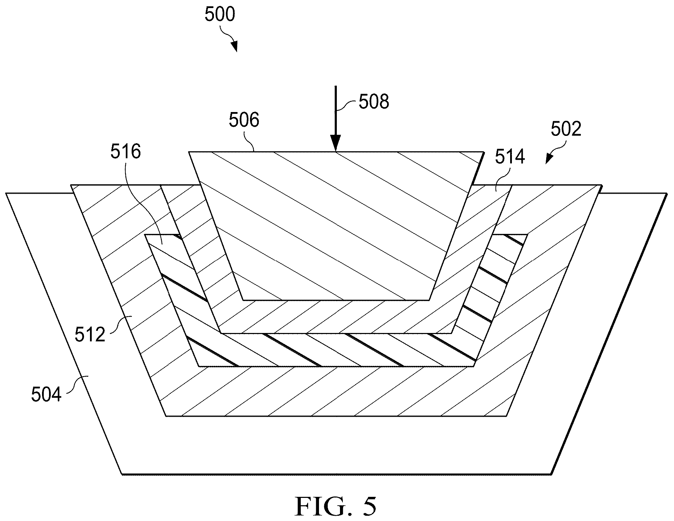

Turning now to **Figure 5****,** an illustration of a cross-sectional view of punch forming a carrier encapsulated composite is depicted in accordance with an illustrative embodiment. View **500** is a view of punch forming carrier encapsulated composite **502.** In some illustrative examples, carrier encapsulated composite **502** can be used to form a component of aircraft **100** of **Figure 1****.** Carrier encapsulated composite **502** can be a physical implementation of carrier encapsulated composite **202** of **Figure 2****.** In some illustrative examples, carrier encapsulated composite **502** can be the same as carrier encapsulated composite **300** of **Figure 3****.** In some illustrative examples, carrier encapsulated composite **502** can comprise flexible consolidation and forming carrier **401** and dry fiber preform **406** of **Figure 4****.**

Carrier encapsulated composite **502** comprises dry fiber preform **516** sealed between first flexible consolidation and forming carrier **512** and second flexible consolidation and forming carrier **514.** Carrier encapsulated composite **502** is formed by placing carrier encapsulated composite **502** onto die **504** and applying force **508** by punch **506.** As punch **506** applies force **508,** carrier encapsulated composite **502** is forced into die **504.**

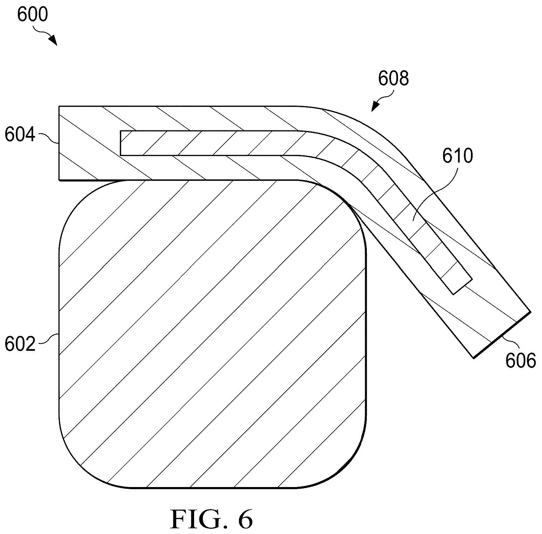

Turning now to **Figure 6****,** an illustration of a cross-sectional view of roll forming a carrier encapsulated composite is depicted in accordance with an illustrative embodiment. View **600** is a view of roller forming carrier encapsulated composite **604.** In some illustrative examples, carrier encapsulated composite **604** can be used to form a component of aircraft **100** of **Figure 1****.** Carrier encapsulated composite **604** can be a physical implementation of carrier encapsulated composite **202** of **Figure 2****.** In some illustrative examples, carrier encapsulated composite **604** can be the same as carrier encapsulated composite **300** of **Figure 3****.** In some illustrative examples, carrier encapsulated composite **604** can comprise flexible consolidation and forming carrier **401** and dry fiber preform **406** of **Figure 4****.**

Carrier encapsulated composite **604** comprises dry fiber preform **610** sealed between first flexible consolidation and forming carrier **606** and second flexible consolidation and forming carrier **608.** Carrier encapsulated composite **604** is formed by progressively applying force by roller **602.**

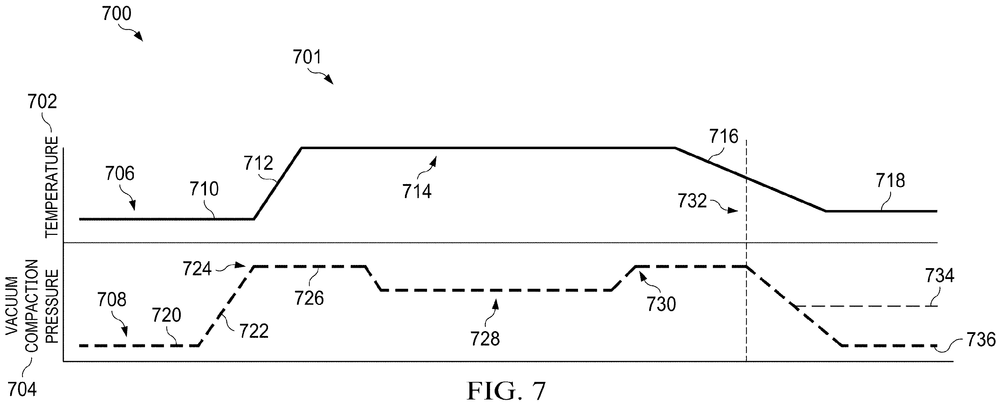

Turning now to **Figure 7****,** an illustration of graphs of vacuum compaction pressure and temperature of a carrier encapsulated composite during processing is depicted in accordance with an illustrative embodiment. View **700** is an illustration of temperature **702** and vacuum compaction pressure **704** during compaction and preforming cycle **701** of a dry fiber preform.

In some illustrative examples, compaction and preforming cycle **701** can be performed to form a composite part of aircraft **100 of** **Figure 1****.** In some illustrative examples, compaction and preforming cycle **701** can be performed on carrier encapsulated composite **202** of **Figure 2****.** In some illustrative examples, compaction and preforming cycle **701** can be performed on carrier encapsulated composite **300** of **Figure 3****.** In some illustrative examples, compaction and preforming cycle **701** can be performed on flexible consolidation and forming carrier **401** and dry fiber preform **406** of **Figure 4****.** In some illustrative examples, compaction and preforming cycle **701** can be performed on carrier encapsulated composite **502** of **Figure 5****.** In some illustrative examples, compaction and preforming cycle **701** can be performed on carrier encapsulated composite **604** of **Figure 6****.**

Ambient temperature **710** is maintained during compaction of the dry fiber preform. Prior to compaction, ambient pressure **720** is maintained. Vacuum ramp **722** occurs during compaction of the dry fiber preform to reach full compaction **724.** In this illustrative example, full compaction **724** is reached prior to heating in temperature ramp **712.** Beginning temperature ramp **712** after full compaction **724** reduces risk of overheating to outer plies of the dry fiber stack.

Active heating during forming process maintains preform temperature **714,** so that preforming tooling can be unheated. Preform heat would be absorbed by colder tools.

Full vacuum **726** is maintained during temperature ramp **712** and initially during preform temperature **714.** Reduced vacuum pressure **728** is applied during forming to allow plies in the dry fiber preform to slip.

Temperature ramp down **716** begins prior to vacuum venting **732** to set the dry fiber preform. In some illustrative examples, venting begins once preform temperature has cooled below a veil softening temperature.

Vacuum compaction pressure **704** returns to full vacuum **730** after the forming process for a final heat set of the dry fiber preform. Full vacuum **730** is maintained for full preform compaction and is held until the part has cooled to retain its final form shape. In some illustrative examples, vacuum compaction pressure **704** returns to ambient pressure **736** after the dry fiber preform has reached the final shape and has cooled sufficiently to retain the final shape. In some illustrative examples, partial vacuum pressure **734** can be maintained after forming to aid in transport of the dry fiber preform. If the dry fiber preform is being loaded into an infusion tool just in time, partial vacuum pressure **734** can be maintained to maintain a low preform moisture level.

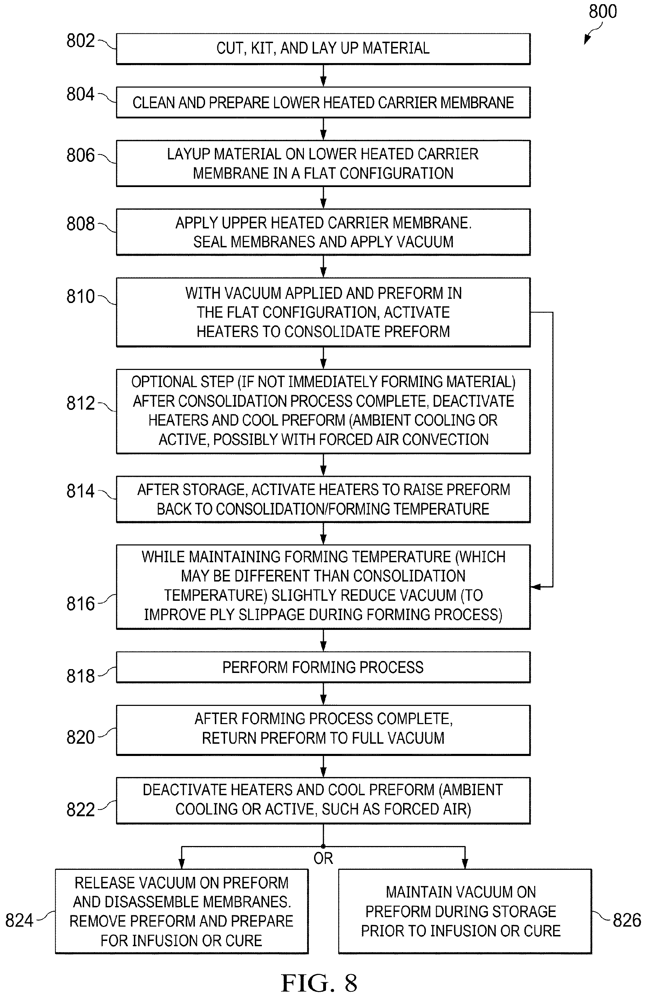

Turning now to **Figure 8****,** a flowchart of a method of processing a dry fiber stack using flexible consolidation and forming carriers is depicted in accordance with an illustrative embodiment. Method **800** can be performed to form a component of aircraft **100** of **Figure 1****.** Method **800** can be performed on dry fiber stack **208** in manufacturing environment **200.** Method **800** can be performed on dry fiber stack **306** of **Figure 3****.** Method **800** can be performed on dry fiber preform **406** of **Figure 4****.** Method **800** can be performed on dry fiber preform **516** of **Figure 5****.** Method **800** can be performed on dry fiber preform **610 of** **Figure 6****.** Method **800** can utilize the compaction and preforming cycle **701** of **Figure 7****.**

Method **800** cuts, kits, and lays up material (operation **802).** The material comprises any desirable quantity of plies in the dry fiber preform.

Clean and prepare lower heated carrier membrane (operation **804).** The lower heated carrier membrane comprises an integrated heating element in the area to receive the dry fiber preform. The lower heated carrier membrane further comprises a seal around the perimeter configured to seal to another heated carrier membrane.

Layup material on lower heated carrier membrane in a flat configuration (operation **806).** In some illustrative examples, the material is laid up in a series of lay-up steps. In other illustrative examples, the material is laid up in a single placement step.

Apply upper heated carrier membrane. Seal membranes and apply vacuum (operation **808).** In some illustrative examples, the seal comprises at least one of a blade seal or a bulb seal. With vacuum applied and preform in the flat configuration, activate heaters to consolidate preform (operation **810).** The heaters are configured to apply sufficient heat to reach a desired temperature throughout the preform.

An optional step can be provided if not immediately forming material. In some illustrative examples, after the consolidation process completes, heaters are deactivated and the preform is cooled. In the illustrative examples, cooling can be ambient or active, possibly with forced air convection. (operation **812).**

After storage, activate heaters to raise preform back to consolidation/forming temperature (operation **814).** At a forming temperature, the thermoplastic material is sufficiently flexible to be formed.

While maintaining forming temperature, which may be different than consolidation temperature, vacuum can be slightly reduced to improve ply slippage during forming process (operation **816).** By reducing the vacuum, wrinkling can be reduced or eliminated during forming.

Method **800** performs forming process (operation **818).** The forming process can be performed using any desirable process such as roller forming, punch forming, or any other desirable forming process.

After forming process complete, return preform to full vacuum (operation **820).** The full vacuum can maintain rigidity of the preform during cooling.

Method **800** deactivates heaters and cools the preform. Cooling can be either ambient cooling or active, such as forced air. (operation **822).**

In some illustrative examples, method **800** releases vacuum on preform and disassembles the membranes. Afterwards, the preform is removed and prepared for infusion or cure (operation **824).**

In some illustrative examples, method **800** maintains vacuum on preform during storage prior to infusion or cure (operation **826).** In some illustrative examples, resin infusion can be performed within the membranes.

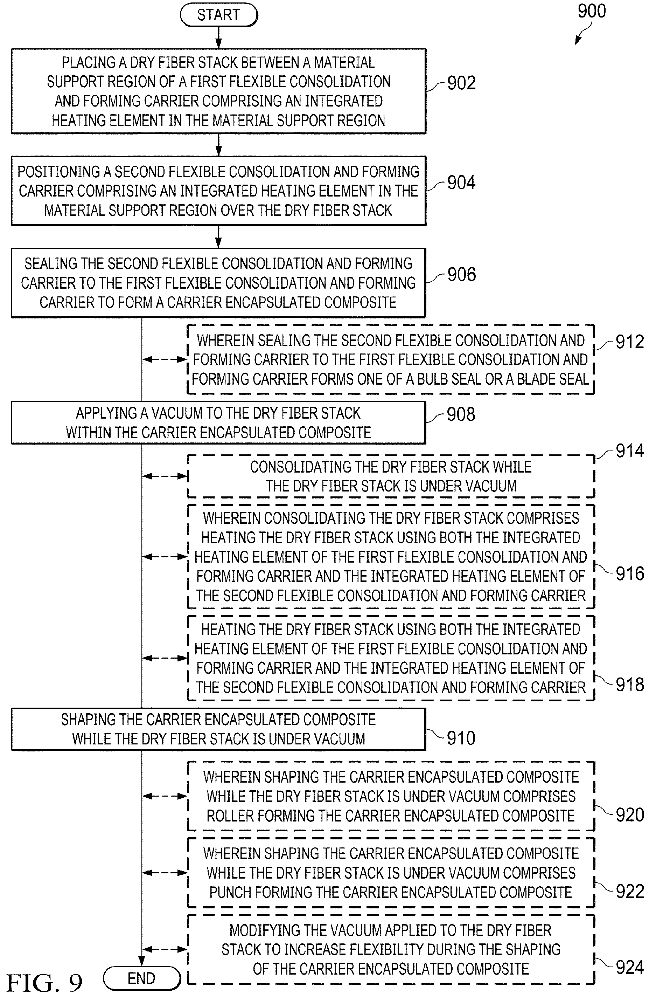

Turning now to **Figure 9****,** a flowchart of a method of forming a dry fiber stack is depicted in accordance with an illustrative embodiment. Method **900** can be performed to form a component of aircraft **100** of **Figure 1****.** Method **900** can be performed on dry fiber stack **208** in manufacturing environment **200.** Method **900** can be performed on dry fiber stack **306** of **Figure 3****.** Method **900** can be performed on dry fiber preform **406** of **Figure 4****.** Method **900** can be performed on dry fiber preform **516** of **Figure 5****.** Method **900** can be performed on dry fiber preform **610** of **Figure 6****.** Method **900** can utilize the compaction and preforming cycle **701** of **Figure 7****.**

Method **900** places a dry fiber stack between onto a material support region of a first flexible consolidation and forming carrier comprising an integrated heating element in the material support region (operation **902).** Method **900** positions a second flexible consolidation and forming carrier comprising an integrated heating element in the material support region over the dry fiber stack (operation **904).** Method **900** seals the second flexible consolidation and forming carrier to the first flexible consolidation and forming carrier to form a carrier encapsulated composite (operation **906).** Method **900** applies a vacuum to the dry fiber stack within the carrier encapsulated composite (operation **908).** Method **900** shapes the carrier encapsulated composite while the dry fiber stack is under vacuum (operation **910).** Afterwards, method **900** terminates.

In some illustrative examples, sealing the second flexible consolidation and forming carrier to the first flexible consolidation and forming carrier forms one of a bulb seal or a blade seal (operation **912).**

In some illustrative examples, method **900** consolidates the dry fiber stack while the dry fiber stack is under vacuum (operation **914).** In some illustrative examples, consolidating the dry fiber stack comprises heating the dry fiber stack using both the integrated heating element of the first flexible consolidation and forming carrier and the integrated heating element of the second flexible consolidation and forming carrier (operation **916).** In some illustrative examples, method **900** heats the dry fiber stack using both the integrated heating element of the first flexible consolidation and forming carrier and the integrated heating element of the second flexible consolidation and forming carrier (operation **918).**

In some illustrative examples, shaping the carrier encapsulated composite comprises any desirable pre-forming process. In some illustrative examples, shaping the carrier encapsulated composite while the dry fiber stack is under vacuum comprises roller forming the carrier encapsulated composite (operation **920).** In some illustrative examples, shaping the carrier encapsulated composite while the dry fiber stack is under vacuum comprises punch forming the carrier encapsulated composite (operation **922).**

In some illustrative examples, method **900** modifies the vacuum applied to the dry fiber stack to increase flexibility during the shaping of the carrier encapsulated composite (operation **924).** In some illustrative examples vacuum is reduced during forming of the dry fiber stack so that plies of the dry fiber stack slip relative to each other during forming.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **912** through operation **924** may be optional.

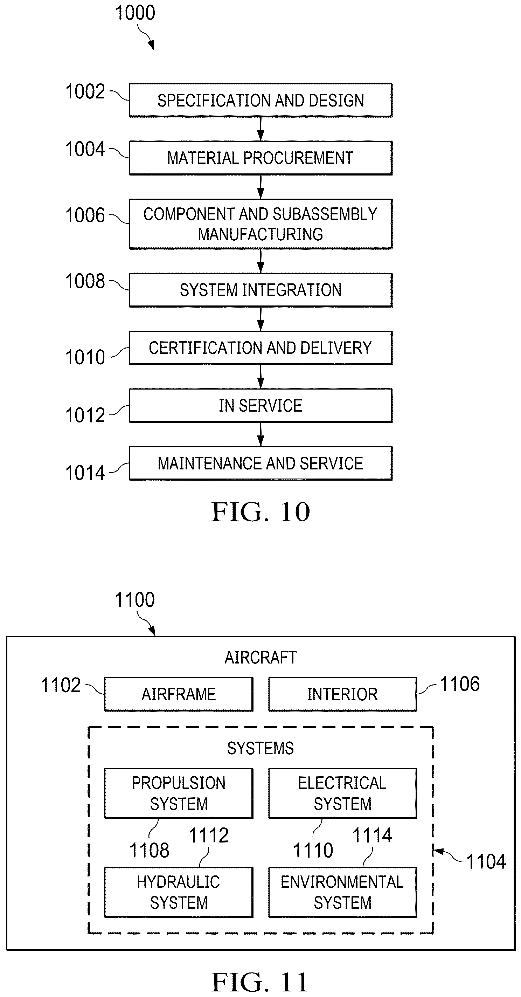

Illustrative embodiments of the present disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method in a form of a block diagram is depicted in accordance with an illustrative embodiment. During pre-production, aircraft manufacturing and service method **1000** may include specification and design **1002** of aircraft **1100** in **Figure 11** and material procurement **1004.** During production, component and subassembly manufacturing **1006** and system integration **1008** of aircraft **1100** takes place. Thereafter, aircraft **1100** may go through certification and delivery **1010** in order to be placed in service **1012.** While in service **1012** by a customer, aircraft **1100** is scheduled for routine maintenance and service **1014,** which may include modification, reconfiguration, refurbishment, or other maintenance and service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on. With reference now to **Figure 11****,** an illustration of an aircraft in a form of a block diagram is depicted in which an illustrative embodiment may be implemented. In this example, aircraft **1100** is produced by aircraft manufacturing and service method **1000** of **Figure 10** and may include airframe **1102** with plurality of systems **1104** and interior **1106.** Examples of systems **1104** include one or more of propulsion system **1108,** electrical system **1110,** hydraulic system **1112,** and environmental system **1114.** Any number of other systems may be included.

Apparatuses and methods embodied herein may be employed during at least one of the stages of aircraft manufacturing and service method **1000.** One or more illustrative embodiments may be manufactured or used during at least one of component and subassembly manufacturing **1006,** system integration **1008,** in service **1012,** or maintenance and service **1014** of **Figure 10****.**

Some materials exist which are rigid at room temperature, but flexible when heated. If the carrier material was such a material, it would be flexible during the heating process but then remain rigid once cooled, assisting with the handling and transportation of the formed dry fiber composite part after the forming process was complete.

The illustrative examples can be used for the preforming of long, thin dry fiber composite shapes such as stringers, spars, or other L or hat shaped stiffeners, to be used in resin-infused structures for structural reinforcement.

Resin infusion provides increased fabrication rates and reduced facilities costs. The illustrative examples aid in the fabrication/forming of stiffeners to support the development of large-scale resin infused composite fabrication.

The illustrative examples provide a process for handling and supporting dry-fiber materials throughout forming. The process includes a pair of flexible carrier membranes, each having an integrate heating elements. The dry-fiber material is prepared and laid-up on a lower membrane, in a flat configuration.

An upper membrane placed over the material and lower membrane, with both membranes extending past the dry-fiber material and configured to seal against one another. Vacuum is applied between the membranes and the heaters are activated for consolidating the material, and vacuum is controlled to maintain rigidity and support while allowing plies to slip during forming process. The heaters can be adjusted for providing a desired temperature throughout the process.

The illustrative examples address obstacles associated with handling and forming dry-fiber materials. The preform material is sandwiched between a pair of flexible carrier membranes having integral heaters. With the dry fiber material disposed between the flexible carrier membranes, vacuum is initiated to compact the dry fiber material and hold the sandwich rigid. The heaters are engaged to maintain a desired temperature throughout the process.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the disclosure comprises examples according to the following clauses:
Clause 1: A flexible consolidation and forming carrier comprising: an integrated heating element arranged in a material support region; a flexible base material encompassing the integrated heating element; and a seal portion around a perimeter of the flexible consolidation and forming carrier.
Clause 2. The flexible consolidation and forming carrier of clause 1, wherein the seal portion comprises at least one of a blade seal or a bulb seal.
Clause 3. The flexible consolidation and forming carrier of clause 1 or 2, wherein the integrated heating element is arranged in a serpentine pattern.
Clause 4. The flexible consolidation and forming carrier of any one of clauses 1 to 3, wherein the flexible base material comprises a polymeric material with a melting temperature higher than a forming temperature of a dry fiber stack.
Clause 5. The flexible consolidation and forming carrier of any one of clauses 1 to 4, wherein the flexible base material comprises silicone.
Clause 6. The flexible consolidation and forming carrier of any one of clauses 1 to 5, wherein the flexible base material comprises reinforced regions with fillers configured to change a flexibility within the reinforced regions.
Clause 7. The flexible consolidation and forming carrier of any one of clauses 1 to 6 further comprising: a vacuum port configured to provide vacuum communication through the seal portion to the material support region.
Clause 8. The flexible consolidation and forming carrier of any one of clauses 1 to 7, wherein the integrated heating element comprises a plurality of independently controlled zones.
Clause 9. A carrier encapsulated composite comprising: a first flexible consolidation and forming carrier with an integrated heating element in a material support region; a second flexible consolidation and forming carrier with an integrated heating element in a material support region; and a dry fiber stack between the first flexible consolidation and forming carrier and the second flexible consolidation and forming carrier and in contact with the material support region of the first flexible consolidation and forming carrier and the material support region of the second flexible consolidation and forming carrier.
Clause 10. The carrier encapsulated composite of clause 9, wherein the first flexible consolidation and forming carrier is sealed to the second flexible consolidation and forming carrier by a seal comprising one of a blade seal or a bulb seal.
Clause 11. The carrier encapsulated composite of clause 10 further comprising: a vacuum port configured to provide vacuum communication through the seal to the dry fiber stack.
Clause 12. The carrier encapsulated composite of any one of clauses 9 to 11, wherein the integrated heating element of the first flexible consolidation and forming carrier and the integrated heating element of the second flexible consolidation and forming carrier each comprise a respective plurality of independently controlled zones.
Clause 13. A method of forming a dry fiber stack comprising: placing a dry fiber stack between a material support region of a first flexible consolidation and forming carrier comprising an integrated heating element in the material support region; positioning a second flexible consolidation and forming carrier comprising an integrated heating element in the material support region over the dry fiber stack; sealing the second flexible consolidation and forming carrier to the first flexible consolidation and forming carrier to form a carrier encapsulated composite; applying a vacuum to the dry fiber stack within the carrier encapsulated composite; and shaping the carrier encapsulated composite while the dry fiber stack is under vacuum.
Clause 14. The method of clause 13 further comprising: consolidating the dry fiber stack while the dry fiber stack is under vacuum.
Clause 15. The method of clause 14, wherein consolidating the dry fiber stack comprises heating the dry fiber stack using both the integrated heating element of the first flexible consolidation and forming carrier and the integrated heating element of the second flexible consolidation and forming carrier.
Clause 16. The method of any one of clauses 13 to 15, wherein shaping the carrier encapsulated composite while the dry fiber stack is under vacuum comprises roller forming the carrier encapsulated composite.
Clause 17. The method of any one of clauses 13 to 15, wherein shaping the carrier encapsulated composite while the dry fiber stack is under vacuum comprises punch forming the carrier encapsulated composite.
Clause 18. The method of any one of clauses 13 to 17, wherein sealing the second flexible consolidation and forming carrier to the first flexible consolidation and forming carrier forms one of a bulb seal or a blade seal.
Clause 19. The method of any one of clause 13 to 17 further comprising: modifying the vacuum applied to the dry fiber stack to increase flexibility during the shaping of the carrier encapsulated composite.
Clause 20. The method of any one of clauses 13 to 19 further comprising: heating the dry fiber stack using both the integrated heating element of the first flexible consolidation and forming carrier and the integrated heating element of the second flexible consolidation and forming carrier.

## Claims

1. A flexible consolidation and forming carrier (204) comprising:
an integrated heating element (224) arranged in a material support region (218);
a flexible base material (210) encompassing the integrated heating element (224); and
a seal portion (252) around a perimeter of the flexible consolidation and forming carrier (204).

2. The flexible consolidation and forming carrier of claim 1, wherein the seal portion comprises at least one of a blade seal (258) or a bulb seal (260).

3. The flexible consolidation and forming carrier of claim 1 or 2, wherein the integrated heating element is arranged in a serpentine pattern.

4. The flexible consolidation and forming carrier of any one of claims 1 to 3, wherein the flexible base material comprises a polymeric material with a melting temperature higher than a forming temperature of a dry fiber stack (208).

5. The flexible consolidation and forming carrier of any one of claims 1 to 4, wherein the flexible base material comprises reinforced regions (220) with fillers (222) configured to change a flexibility within the reinforced regions.

6. The flexible consolidation and forming carrier of any one of claims 1 to 5 further comprising:
a vacuum port (262) configured to provide vacuum communication through the seal portion (252) to the material support region (218).

7. The flexible consolidation and forming carrier of any one of claims 1 to 6, wherein the integrated heating element comprises a plurality of independently controlled zones (226).

8. A carrier encapsulated composite (202) comprising:
a first flexible consolidation and forming carrier (204) with an integrated heating element (224) in a material support region (218);
a second flexible consolidation and forming carrier (206) with an integrated heating element (242) in a material support region (241); and
a dry fiber stack (208) between the first flexible consolidation and forming carrier and the second flexible consolidation and forming carrier and in contact with the material support region of the first flexible consolidation and forming carrier and the material support region of the second flexible consolidation and forming carrier.

9. The carrier encapsulated composite of claim 8, wherein the first flexible consolidation and forming carrier is sealed to the second flexible consolidation and forming carrier by a seal (256) comprising one of a blade seal (258) or a bulb seal (260).

10. The carrier encapsulated composite of claim 8 or 9 further comprising:
a vacuum port (262) configured to provide vacuum communication through the seal to the dry fiber stack (208).

11. The carrier encapsulated composite of any one of claims 8 to 10, wherein the integrated heating element of the first flexible consolidation and forming carrier and the integrated heating element of the second flexible consolidation and forming carrier each comprise a respective plurality of independently controlled zones (226, 244).

12. A method (900) of forming a dry fiber stack comprising:
placing (902) a dry fiber stack (208) between a material support region of a first flexible consolidation and forming carrier (204) comprising an integrated heating element in the material support region;
positioning (904) a second flexible consolidation and forming carrier (206) comprising an integrated heating element in the material support region over the dry fiber stack;
sealing (906) the second flexible consolidation and forming carrier (206) to the first flexible consolidation and forming carrier (204) to form a carrier encapsulated composite (202);
applying (908) a vacuum to the dry fiber stack within the carrier encapsulated composite; and
shaping (910) the carrier encapsulated composite while the dry fiber stack is under vacuum.

13. The method of claim 12 further comprising:
consolidating (914) the dry fiber stack while the dry fiber stack is under vacuum, wherein consolidating the dry fiber stack comprises heating the dry fiber stack using both the integrated heating element of the first flexible consolidation and forming carrier and the integrated heating element of the second flexible consolidation and forming carrier.

14. The method of claim 12 or 13, wherein sealing the second flexible consolidation and forming carrier to the first flexible consolidation and forming carrier forms one of a bulb seal (260) or a blade seal (258).

15. The method of any one of claims 12 to 14 further comprising:
heating (918) the dry fiber stack using both the integrated heating element of the first flexible consolidation and forming carrier and the integrated heating element of the second flexible consolidation and forming carrier.
